# EUROPÄISCHE PATENTSCHRIFT

(11) **EP 0 531 790 B1**
(45) Veröffentlichungstag und Bekanntmachung des Hinweises auf die Patenterteilung: **22.04.1998**
(21) Anmeldenummer: 92114451.5
(22) Anmeldetag: 25.08.1992
(51) Int. Cl.: F16L 9/14, B29C 63/46

(54) **Rohrleitungsverbindung für ein Verbundrohr**
Connection for composite pipe
Raccord pour tuyau composite

(30) Priorität: 11.09.1991 DE 4130167; 27.05.1992 DE 4217538
(43) Veröffentlichungstag der Anmeldung: 17.03.1993
(73) Patentinhaber: WIRSBO ROHRPRODUKTION UND VERTRIEBS-GmbH, D-63150 Heusenstamm (DE)
(72) Erfinder: Imgram, Friedrich, D-6056 Heusenstamm (DE)
(74) Vertreter: Wolgast, Rudolf, Dipl.-Chem. Dr.

(56) Entgegenhaltungen:
- EP-A- 0 241 297
- EP-A- 0 254 489
- WO-A-91/02918
- WO-A-92/09840
- AU-A- 6 548 174
- DE-A- 2 531 785
- FR-A- 2 191 058
- GB-A- 1 124 540
- US-A- 5 135 698

## Beschreibung

Die Erfindung betrifft eine Rohrleitungsverbindung enthaltend das Rohrende eines Verbundrohres aus einem Außenrohr und einem Innenrohr, das dem Außenrohr über dessen gesamte Länge anliegt, und ein Verbindungsstück mit einem Anschlußteil, das mindestens ein hochstehendes Verbindungselement aufweist und mit dem gegenüber dem Anschlußteil weiteren Rohrende zusammengepreßt ist.

Bekannte Verbundrohre (EP-A-0 254 489) werden dadurch erhalten, daß ein Rohr aus einem thermoelastischen Kunststoff wie HD-Polyethylen oder vernetztem Polyethylen bei einer bestimmten Temperatur über einem Kristallitschmelzpunkt gereckt und unter den Kristallitschmelzpunkt abgekühlt wird, wobei das Rohr seinen gereckten Zustand behält. Das gereckte Kunststoffrohr wird dann in ein Metallrohr eingefUhrt, das zum Beispiel aus Stahl besteht und einen Innendurchmesser hat, der etwas kleiner ist als der Außendurchmesser des nicht gereckten Kunststoffrohres. Bei Erwärmung in einem Ofen über den Kristallitschmelzpunkt dehnt sich das thermoelastische Kunststoffrohr aus und sucht seinen ursprünglichen Zustand wieder einzunehmen. Infolgedessen legt es sich eng und dicht an die Innenwand des Metallrohres an; dieser Vorgang kann durch Anlegen von Innendruck gefördert werden. Der Verbund zwischen den beiden Rohren kann durch einen Haftvermittler verstärkt werden.

Ein solches Verbundrohr hat dadurch vorteilhafte Eigenschaften, daß das Außenrohr aus einem unter den Einsatzbedingungen korrosionsfesten Metall wie Edelstahl ausgewählt wird. Dadurch erhält das Verbundrohr die schätzenswerten Eigenschaften des Metalls, d.h. die Wärmeausdehnung ist nicht größer als bei Metallen, die Bearbeitung erfolgt mit den für Metalle üblichen Werkzeugen unter den für Metalle üblichen Bearbeitungsbedingungen, und das Verbundrohr ist diffusionsfest, da das Metall gegen das Eindringen von Luftsauerstoff oder Geruchsstoffen von außen schützt. Diese Eigenschaften sind beispielsweise für Trinkwasserleitungen und Heißwasserleitungen, aber auch generell für im Sanitärbereich verlegte oder zu verlegende Wasserleitungen von Bedeutung.

Andererseits ist das Verbundrohr dadurch ausgezeichnet, daß das Innenrohr aus dem thermoelastischen Kunststoff besteht und somit dessen hohe Korrosionsfestigkeit gegen die unterschiedlichsten chemischen Einflüsse und auch dessen hohe Standzeiten besitzt. Das Außenrohr kommt daher nicht in Berührung mit dem durch das Innenrohr fließenden Medium, wie auch andererseits das Metallrohr das Medium, das durch das Innenrohr fließt, gegen das Eindringen von schädlichen oder unerwünschten Stoffen schützt.

Schließlich ist auch zu berücksichtigen, daß die Ummantelung des Kunststoffrohres durch das Metallrohr eine erhöhte Feuersicherheit bietet, da das freie Kunststoffrohr, das ja aus Kohlenstoffverbindungen besteht, bei entsprechend hohen Temperaturen brennbar ist.

Es hat sich darüberhinaus ebenfalls gezeigt, daß die unterschiedlichen thermischen Eigenschaften der thermoelastischen Kunststoffe und des Metalls keine Rolle spielen. Einerseits besitzt das Außenrohr aus Metall genügende mechanische Festigkeit, um thermisch verursachten Formänderungen des Innenrohres zu widerstehen. Andererseits wirkt sich die stärkere thermische Verformung des Innenrohres so aus, daß lediglich geringe Wandstärkenänderungen auftreten, die den Durchfluß des Mediums durch das Innenrohr nicht beeinträchtigen. Die Verbindung zwischen dem Innenrohr und dem Außenrohr ist so fest, daß die stärkeren thermischen Verformungen des Innenrohres nicht dazu führen, daß sich dieses aus der dichten Anlage an dem Außenrohr löst.

Bei einer bekannten Rohrleitungsverbindung insbesondere zwischen Verbindungsstücken aus Edelstahl oder Rotguß (Mannesmann AG; R. Nussbaum AG, CH-4601 Olten) und Edelstahlrohren enthält das Verbindungsstück ein Anschlußteil mit einer hochstehenden Sicke zur Aufnahme eines Dichtrings. Zur Herstellung der Rohrleitungsverbindung wird das Rohrende des zu verbindenden Edelstahlrohres in das Anschlußteil eingeführt, und das Rohrende und das Anschlußteil werden mittels eines mechanischen oder hydraulischen Preßwerkzeugs zusammengepreßt und dabei verformt, sodaß eine formschlüssige, durch den Dichtring abgedichtete Verbindung entsteht.

Eine weitere bekannte Rohrleitungsverbindung (FR-A-2 191 058) besteht zwischen einem Anschlußteil, das mit mehreren hochstehenden Verbindungselementen und Ringnuten versehen ist, und einem Verbundrohr aus einem flexiblen Rohrkörper mit einer Metalldrahtverstärkung und einem Innenmantel aus Polytetrafluorethylen. Das Anschlußteil hat einen Innendurchmesser, der kleiner als der Innendurchmesser des Verbundrohres ist. Zur Herstellung der Rohrleitungsverbindung wird auf das Rohrende des Verbundrohres ein Ring aufgeschoben und das Rohrende zwischen dem Ring und dem Anschlußteil zusammengepreßt. Durch diesen Preßvorgang wird der Innenmantel des flexiblen Verbundrohres in die Ringnuten hineingedrückt und füllt diese aus; eines der hochstehenden Verbindungselemente enthält eine scharfe Kante, die den Innenmantel durchdringt und an dem Rohrkörper zur Anlage kommt. Durch die besondere Ausbildung des Anschlußteils wird eine Verdrehung des Rings gegenüber dem Anschlußteil und die Lösung der Verbindung durch das bekannte "Kriechen" des unter Druck stehenden Polytetrafluorethylens verhindert.

Die Aufgabe der Erfindung besteht darin, eine Rohrleitungsverbindung der eingangs genannten Art zu schaffen, die unter Verwendung des vorerwähnten Verbundrohres, das aus einem Außenrohr aus Metall und einem Innenrohr aus thermoelastischem Kunststoff besteht, auf einfache Weise ohne Beschädigung des Innenrohres hergestellt werden kann, unter den verschiedensten Einsatzbedingungen fest und dicht ist und den Durchfluß des Mediums aus dem Verbundrohr durch die Rohrleitungsverbindung nicht beeinträchtigt.

Erfindungsgemäß wird diese Aufgabe dadurch gelöst, daß das Anschlußteil einen Innendurchmesser hat, der dem Innendurchmesser des Verbundrohres entspricht, daß das Rohrende des Verbundrohres gegenüber dem Anschlußteil aufgeweitet ist und daß das Verbundrohr aus einem Außenrohr aus Metall und einem Innenrohr aus thermoelastischem Kunststoff besteht, das dem Außenrohr durch thermoelastische Dehnung über dessen gesamte Länge einschließlich des mit dem Anschlußteil zusammengepreßten Rohrendes abdichtend anliegt.

Die Rohrleitungsverbindung wird auf diese Weise auch mit einem Verbundrohr gebildet, das ein Außenrohr aus Metall enthält. Für die Herstellung dieser Verbindung ist die Einlage eines Dichtrings nicht erforderlich, und die Rohrleitungsverbindung ist unlösbar, ohne daß es dazu einer Durchdringung des Innenrohres durch das hochstehende Verbindungselement bedarf.

Vorteilhafte Weiterbildungen der erfindungsgemäßen Rohrleitungsverbindung sind in Unteransprüchen gekennzeichnet.

Ausführungsbeispiele der Erfindung sind in den Abbildungen dargestellt und werden nachstehend an Hand der Bezugszeichen im einzelnen beschrieben. Es zeigen
- Figur 1: eine schematische Schnittdarstellung eines ersten Ausführungsbeispiels der erfindungsgemäßen Rohrleitungsverbindung;
- Figur 2: eine Ansicht eines zweiten Ausführungsbeispiels der erfindungsgemäßen Rohrleitungsverbindung vor Herstellung der Verbindung; und
- Figur 3: eine Ansicht der fertigen Rohrleitungsverbindung nach Figur 2.

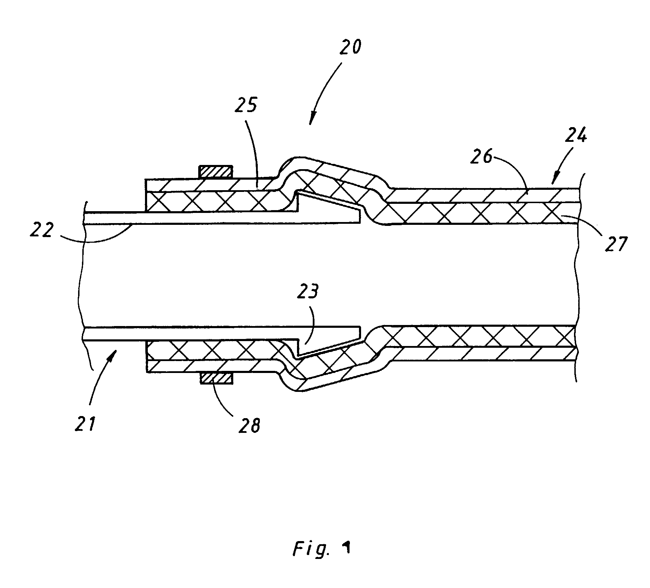

Figur 1 zeigt in einer schematischen Schnittdarstellung ein erstes Ausführungsbeispiel einer Rohrleitungsverbindung 20 unter Verwendung des bekannten, eingangs erwähnten Verbundrohres 24.

Das Außenrohr 26 des Verbundrohres 24 besteht beispielsweise aus Edelstahl oder rostfreiem Stahl der Sorte 14571 (X6CrNiMo17122), die unter sauren Bedingungen korrosionsfest ist. Unter anderen Einsatzbedingungen werden dementsprechend gewählte Stahlsorten und gegebenenfalls auch andere Metalle oder Metallegierungen eingesetzt. Die Auswahl erfolgt darüberhinaus unter dem Gesichtspunkt der Festigkeit und der thermischen Ausdehnung.

Das Innenrohr 27 besteht aus eines thermoelastischen Kunststoff. Darunter wird ein Kunststoff verstanden, der bei erhöhter Temperatur erweicht, sodaß er relativ leicht verformbar ist, und nach der Verformung bei der erhöhten temperatur und nach Abkühlung auf Umgebungatemperatur seine Form beibehält, aber beim Wiedererwärnen auf die Verformungstemperatur infolge der dabei auftretenden Erweichung einer Selbst-Rückverformung in die ursprüngliche Form unterliegt. Ein bevorzugtes Beispiel für solche thermoelastischen Kunststoffe sind die vernetzten Polyolefine. In dem dargestellten Ausführungsbeispiel besteht das Inenrohr 27 aus vernetztem Polyolefin.

Man erkennt in der Abbildung ein Verbindungsstück 21 mit einem Anschlußteil 22. Dieses Verbindungsstück 21 kann aus jedem geeigneten Material bestehen und die unterschiedlichsten Formen annehmen, zum Beispiel ein Winkelrohr, ein T-Stück oder auch ein Rohrende eines anderen Rohres sein, das ebenfalls ein solches Verbundrohr sein kann. Das Anschlußteil 22 ist mit einer hochstehenden Oberflächenstruktur bzw. einem hochstehenden Verbindungselement 23 versehen, das so ausgebildet ist, daß es ein Abgleiten des verbundenen Rohrendes 25 des Verbundrohres 24 nach Herstellung der Verbindung verhindert. In dem dargestellten Ausführungsbeispiel bildet das Verbindungselement 23 einen hochstehenden, auf einer Seite steil und auf der anderen Seite schräg abfallenden Vorsprung. Das Verbindungselement 23 kann allgemein aus einer Wulst, Sicke, Rille oder Rändelung bestehen, die das Abgleiten des Rohrendes 25 von dem Anschlußteil 22 wirksam verhindert.

Wie dargestellt, hat das Anschlußteil 22 einen Innendurchmesser, der dem Innendurchmesser des Verbundrohres 24 entspricht. Auf das Anschlußteil 22 ist außen das Rohrende 25 des Verbundrohres 24 aufgeschoben; dieses Rohrende 25 ist beispielsweise mit Hilfe eines üblichen Spreizdorns auf einen Innendurchmesser aufgeweitet worden, der etwas größer ist als der Außendurchmesser des Anschlußteils 22.

Das über das hochstehende Verbindungselement 23 hinaus auf das Anschlußteil 22 aufgeschobene Rohrende 25 ist mit dem Anschlußteil 22 zusammengepreßt und dadurch fest an diesem gehalten. Dies kann mit Hilfe des eingangs erwähnten mechanischen oder hydraulischen Preßwerkzeugs geschehen, das im Angriffsbereich eine Verformung des Rohrendes 25 und des Anschlußteils 22 bewirkt, wodurch eine formschlüssige, sichere Verbindung zwischen den beiden Teilen entsteht. Stattdessen kann aber auch ein Spannglied 28 verwendet werden, welches das außen aufgeschobene Rohrende 25 umgreift und angezogen wird. Solche Spannglieder sind an sich bekannt und daher hier nur schematisch angedeutet; es kann dafür beispielsweise eine Rohrschelle verwendet werden.

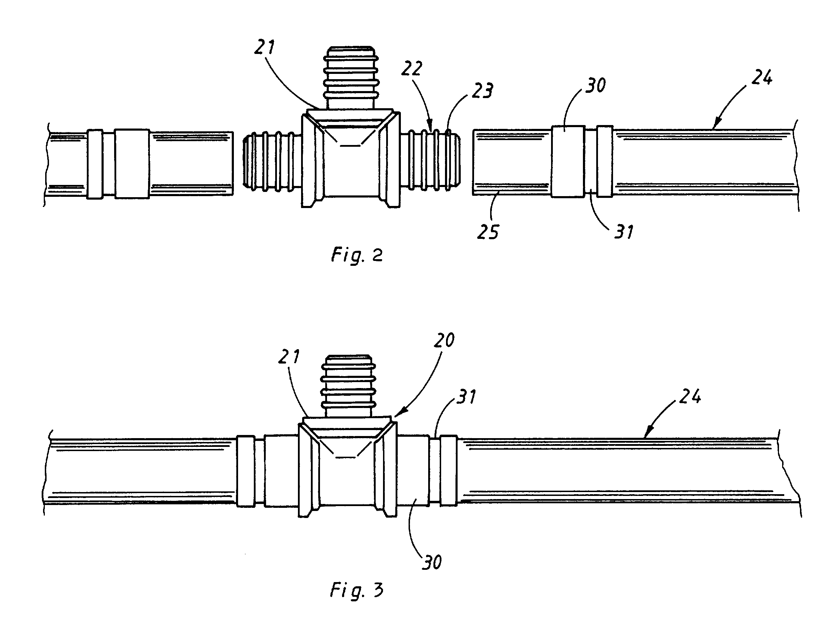

Zur Herstellung des zweiten Ausführungsbeispiels der Rohrleitungsverbindung 20 nach Figur 2 wird das Verbundrohr 24 mit einem T-förmigen Verbindungsstück 21 mit drei Anschlußteilen 22 verbunden. Statt des T-förmigen Verbindungsstücks 21 können dafür andere Verbindungsstücke, zum Beispiel Winkelrohre, eingesetzt werden.

Jedes Anschlußteil 22 ist mit mehreren, von seinem Umfang hochstehenden Verbindungselementen 23 versehen, die so ausgebildet sind, daß sie ein Abgleiten des verbundenen Rohrendes 25 nach Herstellung der Verbindung sicher verhindern. In dem dargestelten Ausführungsbeispiel bilden die Verbindungselemente 23 axial im Abstand am Umfang des Anschlußteils 22 angeordnete, ringförmige Glieder. Die Verbindungselemente 23 können aber auch entsprechend Figur 1 mit Schrägflächen und abfallenden Kanten oder allgemein als Wulst oder Sicke, auch als Rändelung so ausgebildet sein, daß ein Abgleiten von dem Anschlußteil 22 wirksam verhindert wird. Die Ausbildung kann auch so sein, daß mindestens eines der hochstehenden Verbindungselemente 23 mit einer Rändelung versehen ist.

Wie in Figur 3 erkennbar ist, ist in der fertigen Rohrleitungsverbindung 20 das Rohrende 25 des Verbundrohres 24 auf das Anschlußteil 22 über die Verbindungselemente 23 hinweg aufgeschoben. Dazu wird dieses Rohrende 25 beispielsweise mittels eines üblichen Spreizdorns auf einen Innendurchmesser aufgeweitet, der etwas größer ist als der Außendurchmesser des Anschlußteils 22.

Das über die hochstehenden Verbindungselemente 23 hinaus auf das Anschlußteil aufgeschobene Rohrende 25 ist mit dem Anschlußteil 22 zusammengepreßt und wird dadurch fest daran gehaltert. Dies kann mit Hilfe des vorstehend erwähnten, mechanischen oder hydraulischen Preßwerkzeugs geschehen, das im Angriffsbereich eine Verformung des Rohrendes 25 und des Anschlußteils 22 bewirkt, wodurch eine formschlüssige, sichere Verbindung zwischen den beiden Teilen entsteht. Stattdessen kann aber auch das Spannglied 28 verwendet werden, welches das außen aufgeschobene Rohrende 25 umgreift und angezogen wird.

Das dargestellte Ausführungsbeispiel enthält zusätzlich einen auf das Rohrende 25 aufgeschobenen Sicherungsring 30.

## Patentansprüche

1. Rohrleitungsverbindung enthaltend das Rohrende (25) eines Verbundrohres (24) aus einem Außenrohr (26) und einem Innenrohr (27), das dem Außenrohr (26) über dessen gesamte Länge anliegt, und ein Verbindungsstück (21) mit einem Anschlußteil (22), das mindestens ein hochstehendes Verbindungselement (23) aufweist und mit dem gegenüber dem Anschlußteil weiteren Rohrende (25) zusammengepreßt ist,
dadurch gekennzeichnet, daß das Anschlußteil (22) einen Innendurchmesser hat, der dem Innendurchmesser des Verbundrohres (24) entspricht, daß das Rohrende (25) des Verbundrohres (24) gegenüber dem Anschlußteil (22) aufgeweitet ist und daß das Verbundrohr (24) aus einem Außenrohr (26) aus Metall und einem Innenrohr (27) aus thermoelastischem Kunststoff besteht, das dem Außenrohr (26) durch thermoelastische Dehnung über dessen gesamte Länge einschließlich des mit dem Anschlußteil (22) zusammengepreßten Rohrendes (25) abdichtend anliegt.

2. Rohrleitungsverbindung nach Anspruch 1, dadurch gekennzeichnet, daß das Außenrohr (26) aus einem unter den Einsatzbedingungen korrosionsfesten Metall gebildet ist.

3. Rohrleitungsverbindung nach Anspruch 2, dadurch gekennzeichnet, daß das Außenrohr (26) aus Edelstahl besteht.

4. Rohrleitungsverbindung nach Anspruch 2 oder 3, dadurch gekennzeichnet, daß das Außenrohr (26) einen thermischen Ausdehnungskoeffizienten hat, der kleiner ist als der des Innenrohres (27).

5. Rohrleitungsverbindung nach einem der Ansprüche 1 bis 4, dadurch gekennzeichnet, daß der thermoelastische Kunststoff aus einem thermoelastischen Polyolefin besteht.

6. Rohrleitungsverbindung nach Anspruch 5, dadurch gekennzeichnet, daß das thermoelastische Polyolefin aus unvernetztem oder vernetztem Polyolefin ausgewählt ist.

7. Rohrleitungsverbindung nach einem der Ansprüche 1 bis 6, dadurch gekennzeichnet, daß zwischen dem Außenrohr (26) und dem Innenrohr (27) ein Haftvermittler angeordnet ist.

8. Rohrleitungsverbindung nach einem der Ansprüche 1 bis 7, dadurch gekennzeichnet, daß das mindestens eine hochstehende Verbindungselement (23) aus der Gruppe Wulst, Sicke, Rille, Rändelung ausgewählt ist.

9. Rohrleitungsverbindung nach einem der Ansprüche 1 bis 8, dadurch gekennzeichnet, daß das Verbindungsstück (21) mit dem Anschlußteil (22) am Rohrende eines weiteren Verbundrohres ausgebildet ist, das aus einem Außenrohr aus Metall und einem Innenrohr aus thermoelastischem Kunststoff besteht, das dem Außenrohr über dessen gesamte Länge durch thermoelastische Dehnung abdichtend anliegt.

10. Rohrleitungsverbindung nach einem der Ansprüche 1 bis 9, dadurch gekennzeichnet, daß das Anschlußteil (22) mehrere hochstehende Verbindungselemente (23) enthält, über die hinweg das aufgeweitete Rohrende (25) des Verbundrohres (24) außen auf das Anschlußteil (22) aufgeschoben ist.

11. Rohrleitungsverbindung nach Anspruch 10, dadurch gekennzeichnet, daß die hochstehenden Verbindungselemente (23) vom Umfang des Anschlußteils (22) hochstehend ausgebildet sind und axial in vorgegebenen Abständen voneinander an dem Anschlußteil (22) angeordnet sind.

12. Rohrleitungsverbindung nach Anspruch 10 oder 11, dadurch gekennzeichnet, daß wenigstens eines der hochstehenden Verbindungselemente (23) mit einer Rändelung versehen ist.

13. Rohrleitungsverbindung nach einem der Ansprüche 10 bis 12, dadurch gekennzeichnet, daß die hochstehenden Verbindungselemente (23) ringförmig ausgebildet sind und ein außen auf das Rohrende (25) des Verbundrohres (24) aufgeschobener Sicherungsring (30) vorgesehen ist.

## Claims

1. Conduit connection comprising the pipe end (25) of a composite pipe (24) of an outer pipe (26) and an inner pipe (27), which engages the outer pipe (26) over the total length thereof, and a connecting member (21) having a connection part (22), which is provided with at least one projecting connecting element (23) and pressed together with the pipe end (25) being wider with respect to the connection part,
**characterized in that** the connection part (22) has an inner diameter corresponding to the inner diameter of the composite pipe (24), the pipe end (25) of the composite pipe (24) is widened with respect to the connection part (22) and the composite pipe (24) consists of an outer pipe (26) of metal and an inner pipe (27) of thermoelastic synthetic material, which sealingly engages the outer pipe (26) by thermoelastic extension over the total length thereof including the pipe end (25) pressed together with the connection part (22).

2. Conduit connection as set forth in claim 1, **characterized in that** the outer pipe (26) is made of a metal, which is noncorrosive under the conditions in use.

3. Conduit connection as set forth in claim 2, **characterized in that** the outer pipe (26) is made of stainless steel.

4. Conduit connection as set forth in claim 2 or 3, **characterized in that** the outer pipe (26) has a thermal coefficent of expansion, which is smaller than that one of the inner tube (27).

5. Conduit connection as set forth in any one of the claims 1 to 4, **characterized in that** the thermoelastic synthetic material consists of a thermoelastic polyolefine.

6. Conduit connection as set forth in the claim 5, **characterized in that** the thermoelastic polyolefine is selected from non-cross-linked or cross-linked polyolefines.

7. Conduit connection as set forth in any one of the claims 1 to 6, **characterized in that** a coupling agent is provided between the outer pipe (26) and the inner pipe (27).

8. Conduit connection as set forth in any one of the claims 1 to 7, **characterized in that** the at least one projecting connecting element (23) is selected from the group of enlargement, bead, groove, knurl.

9. Conduit connection as set forth in any one of the claims 1 to 8, **characterized in that** the connecting member (21) provided with the connection part (22) is provided at the pipe end of a further composite pipe, which consists of an outer pipe of metal and an inner pipe of thermoelastic synthetic material, which sealingly engages the outer pipe by thermoelastic extension over the total length thereof.

10. Conduit connection as set forth in any one of the claims 1 to 9, **characterized in that** the connection part (22) is provided with a plurality of projecting connecting elements (23), over which the widened pipe end (25) of the composite pipe (24) is pushed over the outside of connection part (22).

11. Conduit connection as set forth in claim 10, **characterized in that** the projecting connecting elements (23) are projecting from the circumference of the connection part (22) and arranged at predetermined distances from each other at the connection part (22).

12. Conduit connection as set forth in claim 10 or 11, **characterized in that** at least one of the projecting connecting elements (23) is provided with a knurl.

13. Conduit connection as set forth in any one of the claims 10 to 12, **characterized in that** the projecting connecting elements (23) are annular and a securing ring (30) is provided, which is pushed on the outside of the pipe end (25) of the composite pipe (24).

## Revendications

1. Connexion de conduite de tuyaux comprenant l'extrémité de tuyau (25) d'un tuyau d'assemblage (24) composé d'un tuyau extérieur (26) et d'un tuyau intérieur (27) étant adjacent sur toute sa longueur au tuyau extérieur (26), et comprenant un raccord (21) muni d'une pièce de raccordement (22), présentant au moins un élément de connexion surélevé (23) et étant pressé contre l'autre extrémité de tuyau (25) par rapport à la pièce de raccordement,
**caractérisée par le fait que**
la pièce de raccordement (22) a un diamètre intérieur correspondant au diamètre intérieur du tuyau d'assemblage (24), que l'extrémité de tuyau (25) du tuyau d'assemblage (24) est élargie par rapport à la pièce de raccordement (22) et que le tuyau d'assemblage (24) se compose d'un tuyau extérieur (26) de métal et d'un tuyau intérieur (27) de matière synthétique thermoélastique qui est adjacent au tuyau extérieur (26) par dilatation thermoélastique de façon susceptible à rendre étanche sur toute sa longueur, y compris sur celle de l'extrémité de tuyau (25) pressée contre la pièce de raccordement (22).

2. Connexion de conduite de tuyaux selon la revendication 1, **caractérisée par le fait que** le tuyau extérieur (26) est formé d'un métal résistant à la corrosion dans les conditions d'utilisation.

3. Connexion de conduite de tuyaux selon la revendication 2, **caractérisée par le fait que** le tuyau extérieur (26) se compose d'acier spécial.

4. Connexion de conduite de tuyaux selon la revendication 2 ou 3, **caractérisée par le fait que** le tuyau extérieur (26) a un coefficient de dilatation thermique inférieur à celui du tuyau intérieur (27).

5. Connexion de conduite de tuyaux selon l'une des revendications 1 à 4, **caractérisée par le fait que** la matière synthétique thermoélastique se compose d'une polyoléfine thermoélastique.

6. Connexion de conduite de tuyaux selon la revendication 5, **caractérisée par le fait que** la polyoléfine thermoélastique est choisie parmi de la polyoléfine réticulée ou non-réticulée.

7. Connexion de conduite de tuyaux selon l'une des revendications 1 à 6, **caractérisée par le fait qu'**un agent adhésif est disposé entre le tuyau extérieur (26) et le tuyau intérieur (27).

8. Connexion de conduite de tuyaux selon l'une des revendications 1 à 7, **caractérisée par le fait qu'**un moins l'un des éléments de connexion surélevé (23) est choisi parmi le groupe renflement, moulure, rainure, moletage.

9. Connexion de conduite de tuyaux selon l'une des revendications 1 à 8, **caractérisée par le fait que** le raccord (21) est développé avec une pièce de raccordement (22) à l'extrémité de tuyau d'un autre tuyau d'assemblage qui se compose d'un tuyau extérieur en métal et d'un tuyau intérieur en matière synthétique thermoélastique qui est adjacent au tuyau extérieur par dilatation thermoélastique sur toute sa longueur de façon susceptible à rendre étanche.

10. Connexion de conduite de tuyaux selon l'une des revendications 1 à 9, **caractérisée par le fait que** la pièce de raccordement (22) contient plusieurs éléments de connexion surélevés (23) par dessus lesquels l'extrémité de tuyau (25) élargie du tuyau d'assemblage (24) est glissée à l'extérieur sur la pièce de raccordement (22).

11. Connexion de conduite de tuyaux selon la revendication 10, **caractérisée par le fait que** les éléments de connexion surélevés (23) sont développés par la circonférence de la pièce de raccordement (22) de façon susceptible à être surélevés et qu'ils sont disposés à la pièce de raccordement (22) axialement à des distances prédonnées les uns des autres.

12. Connexion de conduite de tuyaux selon la revendication 10 ou 11, **caractérisée par le fait qu'**au moins l'un des éléments de connexion surélevés (23) est pourvu d'un moletage.

13. Connexion de conduite de tuyaux selon l'une des revendications 10 à 12, **caractérisée par le fait que** les éléments de connexion surélevés (23) sont développés en forme d'anneau et qu'une bague de sécurité (30) glissée à l'extérieur sur l'extrémité de tuyau (25) du tuyau d'assemblage (24) est prévue.
